# EUROPEAN PATENT SPECIFICATION

(11) **EP 0 542 357 B1**
(45) Date of publication and mention of the grant of the patent: **13.03.1996**
(21) Application number: 92203431.9
(22) Date of filing: 07.11.1992
(51) Int. Cl.: F16D 65/092, F16D 69/04

(54) **Brake element comprising linings secured to backing plates**
Bremsklotz mit Belag auf Rückenplatte befestigt
Element de frein comprenent des garnitures fixées à des plateaux support

(30) Priority: 15.11.1991 GB 9124310
(43) Date of publication of application: 19.05.1993
(73) Proprietor: FERODO LIMITED, Manchester M3 2NL (GB); BRITISH RAILWAYS BOARD, London NW1 1DZ (GB)
(72) Inventor: Dolbear, Keith David, Buxton, Derbyshire SK17 9SL (GB); Beamond, Trevor Wyn, Matlock, Derbyshire DE4 5EG (GB); Schofield, Kerry Graham, Breadsall, Derbyshire DE2 4GD (GB)
(74) Representative: Gibson, George Kevin

(56) References cited:
- EP-A- 0 423 057
- DE-A- 3 734 289
- US-A- 3 231 058

## Description

This invention relates to brakes, and more particularly to brake elements comprising linings secured to backing plates, such as brake blocks, or brake pads.

For example, a brake pad is mounted in a carrier and is slidable forwards and backwards along a guideway in the carrier into and out of a working position in which it can be locked, for engagement with the moving element of a brake system to be retarded or stopped. Such pads are used in rail vehicle brake systems, but are in principle usable elsewhere, for example in heavy goods road vehicles. When a lining has become worn or otherwise defective, then by releasing the lock the pad can be slid backwards along the guideway and so withdrawn from the carrier; replacement of a fresh pad is thus facilitated.

EP-A-0,423,057 is directed to noise abating blocks for automatic brake shoe assemblies. In one embodiment a block of conventional friction material is modified by having discrete particles including an elastomeric material embedded in the friction material. In another embodiment a block of conventional friction material is secured to a backing shoe by an intermediate layer including an elastomeric material. In another embodiment strips containing elastomeric material each are provided to extend between part of the interface between a block of conventional friction material and a backing shoe.

It is an object of the present invention to provide novel and advantageous brake elements comprising linings secured to backing plates, such as brake blocks or brake pads. It is also an object of the present invention to provide a novel and advantageous method of manufacturing such brake elements. Thus, hot-spotting of and thermal damage to the surface of a moving element, such as a rotary element, which it retards or stops when engaged therewith, are reduced. Additionally, wear of the lining itself may be reduced compared with known forms of such linings.

According to one aspect of the present invention, a brake element comprises a lining including a layer of elastomeric material secured to a backing plate, and remote from the backing plate the lining has a working surface, in the part of the lining providing the working surface there being friction material, and constituent particles of this part of the lining are distributed randomly, the elastomeric material is softer than the friction material, and the element is characterised by the randomly distributed particles being of friction material embedded in the elastomeric material, and the elastomeric material has a Rockwell value, greater than 0.30 millimetre penetration.

Two or more different frictional materials may be provided in the lining.

According to another aspect of the invention, a method of manufacturing a brake element includes forming a lining in a die, and the lining includes a layer of elastomeric material secured to a backing plate, and cured in the die, remote from the backing plate the lining has a working surface; in the part of the lining providing the working surface particles of friction material are distributed randomly, the cured elastomeric material is softer than the friction material, and the particles of friction material being embedded in the layer of elastomeric material, at least one nominally uniform mix of the composition from which the layer of elastomeric material is obtained, together with the particles of friction material suspended therein, is prepared and placed in the die, and the cured elastomeric material has a Rockwell value greater than 0.30 millimetre penetration.

It may be that the improved properties resulting from this construction for such a brake element are a result of the layer of elastomeric material making the lining more conformable to the working surface of the moving element, compared with known forms of such linings, and so that the two surfaces engage more uniformly.

Preferably the elastomeric layer has a Rockwell value of a depth of penetration (using a Rockwell hardness machine) at least twice that of the friction material.

The friction material may have a composition including a polymeric binder together with reinforcing fillers and/or binders, and may be entirely conventional, such as for example that described in US 3,227,249; or, if the non-asbestos kind is desired, that described in GB 1,604,827; and may also include fibres.

The elastomeric layer may likewise vary widely in composition, provided that it is not cured to a degree beyond that at which it becomes so cross-linked as to lose its softness relative to that of the friction material. Thus, there may be used the compositions described in Ferodo Limited GB 1 249 922 as being suitable for the manufacture of non-squeal railway brake blocks for direct engagement with the external periphery of a rail vehicle wheel.

Conveniently two or more different frictional materials are provided in the lining, initially within the method different nominally uniform mixes being prepared, each mix including one of the constituent friction materials, and the different mixes being blended together before the composition obtained thereby is placed in a die.

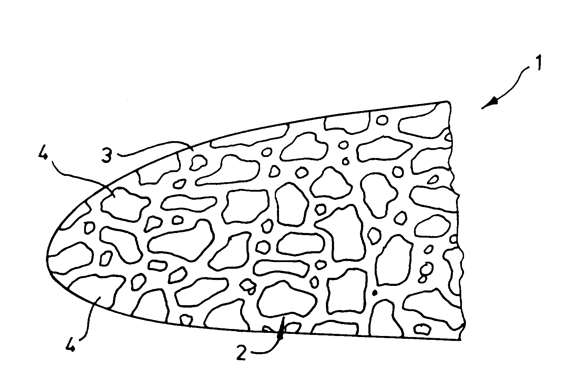

The invention will now be further described with reference to the Example; and to the accompanying drawing, comprising a plan view of part of a lining of a brake pad, the lining having a surface that is essentially flat, and is to engage a moving element, and is secured to a metal backing plate.

The illustrated lining 1 is for a brake pad (not shown) which brake pad is in two parts, each part having a lining secured to a metal backing plate of dovetail cross-section. The lining 1 has a surface 2 remote from the backing plate, which surface is essentially flat, and is to be engaged by a moving element to be retarded or stopped. The moving element to be retarded or stopped may comprise the disc of a disc brake system. The backing plate is keyed to the lining 1 by tongues pressed out of the plane of the plate, leaving apertures therein. The surface 2 of the lining 1 is conventionally grooved, the grooving not being shown, but being both transverse and longitudinal.

### Example

1. A metal backing plate is shot-blasted to clean it, and adhesive of the kind conventionally used for direct bonding of the lining is applied to the plate and allowed to dry off during 12 hours.
2. A nominally uniform mix of the composition from which an elastomer 3 of the lining 1 is obtained, together with particles of cured conventional friction material 4, as referred to above, and suspended in, the elastomer, is prepared and placed in a die. This mix is covered, in the die, with a layer of the elastomer. The elastomer composition comprises:-

| | % by weight | Function |
|---|---|---|
| Nitrile rubber | 28.3 | Elastomer binder |
| Powdered Sulphur | 2.8 | ) |
| | | ) Curing agent |
| Accelerator | 0.6 | ) |
| Powdered Carbon Black | 5.7 | Reinforcing filler |
| Powdered Whiting | 57.0 | Bulking filler |
| Asbestos or other reinforcing fibre | 5.6 | Reinforcement fibre |

The above composition is employed in particulate form: first its ingredients are mixed in a Banbury mixer, and the resulting unitary mass is then disintegrated.
3. The metal backing plate is superimposed on the elastomer layer, and the assembly is pressed under a pressure of 85 megaPascals, at ambient temperature for 10 seconds.
4. The assembly is baked in an air-circulation oven for 4 hours at 150°C to cure the layer of elastomer composition. Baking is carried out in packs with metal inserts to prevent undue compression of the elastomeric layer during its cure. Any exudate of elastomer at the assembly sides is then removed by machining.
5. The baked assembly is finally ground to a total thickness of 18 millimetres, and grooves are then cut in the exposed surface 2 of the lining 1 by conventional procedure.

Typical Rockwell values (ball diameter 2.54 centimetres, with 30 kiligrams major load) are: for the friction material, 0.20 millimetre, penetration (a Shore D value of 75) and for the elastomer > 0.30 millimetre penetration (a Shore D value of < 50).

Thus, as shown, the lining 1 comprises a layer 3 of the elastomeric material having embedded therein a plurality of particles 4 of the friction material. Some of the particles 4 extend to the surface 2 of the lining 1 remote from the backing plate (not shown).

The friction material particles 4 are distributed randomly, and nominally uniformly, in the part of the lining 1 providing the working surface 2 thereof; and the particles may have different shapes and sizes. Conveniently, the mean diameter of the particles is approximately 5 millimetres.

The composition from which the elastomeric layer is obtained, and the composition of the friction material, are compatible with each other.

The composition of the lining 1 as described above may be modified so that particles 4 of two, or more, different friction materials are embedded in the layer of elastomer 3. Conveniently, the different friction materials may be incompatible with each other, but they are required to be capable of being secured within the elastomeric layer in a satisfactory manner. The selection of the different friction materials, amongst other reasons, may be such that the lining obtained thereby has a required frictional performance, not readily obtainable from a single frictional material. Thus, initially, two, or more, nominally uniform mixes, each of the composition from which the elastomer layer is obtained, together with particles of one of the constituent frictional materials suspended therein, are prepared. Then the different mixes are blended together, and this composition is placed in the die.

Such a composition may include particles of friction material as follows, the values given being the percentage by volume of the total amount of frictional material in the composition:-

| | Mix 1 | Mix 2 |
|---|---|---|
| Liquid phenolic resin modified with cashew nut oil | 10 | 15.5 |
| Steel fibre | 8.5 | 0 |
| Organic fibre | 0 | 11.5 |
| Whiting | 10 | 16 |
| Crumb rubber | 5 | 0 |
| Graphite | 0 | 2.5 |
| Disintegrated resin | 0 | 21 |

A lining in accordance with the present invention, instead of comprising part of a brake pad, may comprise part of a brake block, or a non-planar brake lining, or the like.

## Claims

1. A brake element comprising a lining including a layer of elastomeric material secured to a backing plate, and remote from the backing plate the lining having a working surface, in the part of the lining providing the working surface there being friction material, and constituent particles of this part of the lining being distributed randomly, the elastomeric material being softer than the friction material, and the element being characterised by the randomly distributed particles being of friction material embedded in the elastomeric material, and the elastomeric material, having a Rockwell value greater than 0.30 millimetre penetration.

2. A brake element according to claim 1, characterised in that two or more different frictional materials are provided in the lining.

3. A method of manufacturing a brake element including forming a lining in a die, and the lining including a layer of elastomeric material secured to a backing plate and cured in the die, remote from the backing plate the lining having a working surface, in the part of the lining providing the working surface particles of friction material being distributed randomly, the cured elastomeric material being softer than the friction material, and the particles of friction material being embedded in the layer of elastomeric material, at least one nominally uniform mix of the composition from which the layer of elastomeric material is obtained, together with the particles of friction material suspended therein, being prepared and placed in the die, and the cured elastomeric material having a Rockwell value greater than 0.30 millimetre penetration.

4. A method according to claim 3, in which two or more different frictional materials are provided in the lining, characterised in that initially within the method different nominally uniform mixes being prepared, each mix including one of the constituent friction materials, and the different mixes being blended together before the composition obtained thereby is placed in a die.

## Patentansprüche

1. Bremsenelement mit einem Futter, das eine Schicht aus elastomerem Werkstoff, die an einer Stützplatte befestigt ist, und entfernt von der Stützplatte eine Arbeitsfläche aufweist, wobei der Abschnitt des Futters, der die Arbeitsfläche ausbildet, Reibmaterial enthält und Werkstoffteilchen dieses Teils des Futters ungeordnet verteilt vorgesehen sind, wobei ferner der elastomere Werkstoff weicher als das Reibmaterial ist und das Element **dadurch gekennzeichnet** ist, daß die ungeordnet verteilten Teilchen aus in den elastomeren Werkstoff eingebettetem Reibmaterial bestehen und der elastomere Werkstoff einen Rockwell-Wert größer als 0,30 mm Eindringtiefe aufweist.

2. Bremsenelement nach Anspruch 1, dadurch gekennzeichnet, daß zwei oder mehr unterschiedliche Reibmaterialien in dem Futter vorgesehen sind.

3. Verfahren zur Herstellung eines Bremsenelementes mit dem Schritt des Formens eines Futters in einem Gesenk, wobei das Futter eine Schicht aus elastomerem Werkstoff, die an einer Stützplatte befestigt und in dem Gesenk gehärtet wird, und entfernt von der Stützplatte eine Arbeitsfläche aufweist, wobei ferner in dem Teil des Futters, der die Arbeitsfläche ausbildet, Reibmaterialteilchen ungeordnet verteilt werden, der gehärtete elastomere Werkstoff weicher als das Reibmaterial ist, und die Reibmaterialteilchen in die Schicht aus elastomerem Werkstoff eingebettet werden, wenigstens eine nominell gleichmäßige Mischung der Zusammensetzung, aus der die Schicht aus elastomerem Werkstoff erhalten wird, zusammen mit den darin verteilten Reibmaterialteilchen vorbereitet und in das Gesenk eingebracht wird, und der gehärtete elastomere Werkstoff einen Rockwell-Wert größer als 0,30 mm Eindringtiefe aufweist.

4. Verfahren nach Anspruch 3, bei dem zwei oder mehr unterschiedliche Reibmaterialien in dem Futter vorgesehen werden, **dadurch gekennzeichnet**, daß anfänglich bei dem Verfahren unterschiedliche, nominell gleichmäßige Mischungen vorbereitet werden, wobei jede Mischung eines der Reibmaterialien aufweist, und die verschiedenen Mischungen zusammengemischt werden, bevor die dabei erhaltene Gesamtmischung in ein Gesenk verbracht wird.

## Revendications

1. Elément de frein comprenant une garniture comportant une couche de matériau élastomère fixée à une plaque de support, la garniture comportant, à distance de la plaque de support, une surface de travail, du matériau de frottement étant présent dans une partie de la garniture constituant la surface de travail, et les particules constitutives de cette partie de la garniture étant distribuées au hasard, le matériau élastomère étant plus mou que le matériau de frottement, et l'élément étant caractérisé par le fait que les particules distribuées au hasard sont en matériau de frottement noyé dans le matériau élastomère, et en ce que le matériau élastomère a une valeur de Rockwell supérieure à 0,30 millimètre de pénétration.

2. Element de frein selon la revendication 1, caractérisé en ce que deux matériaux de frottement différents ou davantage sont présents dans la garniture.

3. Procédé de fabrication d'un élément de frein comprenant la formation d'une garniture dans une matrice, la garniture comprenant une couche de matériau élastomère fixée à une plaque de support et durcie dans la matrice, la garniture comportant, à distance de la plaque de support, une surface de travail, des particules de matériau de frottement étant distribuées au hasard dans la partie de garniture constituant la surface de travail, le matériau élastomère durci étant plus mou que le matériau de frottement, et les particules de matériau de frottement étant noyées dans la couche de matériau élastomère, au moins un mélange nominalement uniforme de la composition à partir de laquelle est obtenue la couche de matériau élastomère, avec les particules de matériau de frottement en suspension dans celle-ci, étant préparé et disposé dans la matrice, et le matériau élastomère durci ayant une valeur de Rockwell supérieure à 0,30 millimètre de pénétration.

4. Procédé selon la revendication 3, dans lequel deux matériaux de frottement différents ou davantage sont présents dans la garniture, caractérisé en ce qu'initialement, dans le procédé, des mélanges nominalement uniformes différents sont préparés, chaque mélange comprenant l'un des matériaux de frottement constitutifs, et les différents mélanges étant mélangés les uns aux autres avant que la composition ainsi obtenue soit disposée dans une matrice.
